# EUROPÄISCHE PATENTSCHRIFT

(11) **EP 1 150 095 B1**
(45) Veröffentlichungstag und Bekanntmachung des Hinweises auf die Patenterteilung: **17.12.2008**
(21) Anmeldenummer: 01107127.1
(22) Anmeldetag: 22.03.2001
(51) Int. Cl.: G01B 11/27, G01C 15/00, G01S 5/16

(54) **Vorrichtung zur quantitativen Beurteilung der fluchtenden Lage zweier Maschinenteile, Werkstücke oder dergleichen**
Device for the quantitative assessment of the alignment ot two machine parts, tools or similar
Dispositif pour l'évaluation quantitative de l'alignement de deux pièces de machine, des outils ou similaires

(30) Priorität: 27.03.2000 DE 10014772
(43) Veröffentlichungstag der Anmeldung: 31.10.2001
(73) Patentinhaber: Prüftechnik Dieter Busch AG, 85737 Ismaning (DE)
(72) Erfinder: Hermann, Michael, 78050 Villingen (DE)

(56) Entgegenhaltungen:
- DE-A- 3 814 466

## Beschreibung

Die Erfindung bezieht sich auf ein Verfahren und zugehörige Vorrichtungen zur Beurteilung der fluchtenden Lage zweier Maschinenteile, zum Beispiel Wellen, Werkzeugmaschinenspindeln, Werkstücken oder dergleichen.

Verfahren der gattungsgemässen Art sind seit mehreren Jahren in Gebrauch und zeichnen sich dadurch aus, dass ihre Anwendung sehr viel Arbeitszeit einspart.

Neben den in der DE 3473344.2-08 und der EP 0183811 genannten Verfahren und Vorrichtungen ist in diesem Zusammenhang auf die Lehre der DE 38 14 466 und der DE 199 23 116 hinzuweisen.

In den beiden zuletzt genannten Schriften wird dargestellt, wie die fluchtende Lage zweier Maschinenteile, insbesondere zweier miteinander zu verbindender Wellen, oder der Ausrichtung zwischen einer Maschinenspindel und einem Werkstück, unter Verwendung einer einzigen strahlerzeugenden Lichtquelle überprüft, vermessen und beurteilt werden kann.

Die bekannten Vorrichtungen und Verfahren sehen Präzisionsteile und -komponenten vor, teilweise auch kostenintensive optische Bauteile, und ermöglichen so präzise und zuverlässige Messungen. Da wie erwähnt die Vorteile der bekannten Systeme erheblich sind, werden die relativ hohen Gestehungskosten der bekannten Geräte dieser Art von der Mehrzahl der potentiellen Anwender akzeptiert.

Es ist Aufgabe der Erfindung, die bekannten Verfahren geräteseitig derart zu verbessern, um signifikant niedrigere Herstellungskosten der Geräte zu erlangen, so dass deren Einsatz auch in solchen Umfeldern möglich wird, wo dies aus Kostengründen bisher entweder nicht in Frage kam oder allenfalls zögernd akzeptiert wurde.

Diese Aufgabe wird durch eine Vorrichtung, wie in den Ansprüchen 1 und 3 definiert, gelöst, welche den Einsatz von separaten optischen Elementen (Reflektoren, Prismen, Linsen) weitestgehend überflüssig macht und dadurch zu erheblichen Kosteneinsparungen führt.

Gemäss der erfindungsgemässen Lösung wird nämlich davon Gebrauch gemacht, dass die Oberfläche von Positions-Detektoren, wie sie aus den zitierten Anmeldeschriften bekannt sind, in der derzeitigen Ausführungsform von sehr gut geeigneter ebener Struktur ist und damit eine eigentlich nicht vorgesehene, aber doch vorhandene zusätzliche Funktion als Spiegel mit definiertem Reflexionsgrad wahrnehmen kann. Weiterhin macht die erfindungsgemässe Lösung davon Gebrauch, dass die energetische Belastbarkeit moderner Positions-Detektoren, speziell in Form von CMOS-Sensoren, erheblich gesteigert werden konnte, so dass eine relativ hohe maximal Intensität bzw. Strahlungsddichte auf dem Sensor zugelassen werden kann. Die erfindungsgemässe Nutzung dieses Sachverhaltes erübrigt damit mindestens ein optisches Präzisionsbauteil und die Kosten bei der Montage desselben, wie z.B. Justagearbeiten, Überprüfung der Funktion, Qualitätskontrolle bei der Beschaffung, usw. Aus diesem Grund kann ein Gerät bereitgestellt werden, welches sich durch deutlich reduzierten Bauteileaufwand auszeichnet, kostengünstiger hergestellt werden kann und somit in vielen weiteren Anwendungsfällen zum Einsatz kommen kann, insbesondere nunmehr auch bei der Überprüfung der Ausrichtung von Werkzeugmaschinen, deren Spindeln oder deren Werkzeugen.

Dementsprechend wird in der Erfindung davon Gebrauch gemacht, eine Vorrichtung wie in den Ansprüchen definiert zur Vermessung oder Beurteilung der Relativlage zweier Maschinenteile, Werkzeuge, oder Werkstücken bereitzustellen.

Die Erfindung wird im folgenden anhand der Zeichnung erläutert.

Es zeigt
Fig. 1 eine bekannte Anordnung von Sensoren zum Feststellen der relativen Lage einer Bezugsachse eines Objektes bezüglich eines Referenz-Strahles, nach dem Stand der Technik
Fig. 2 eine weitere bekannte Anordnung zum Feststellen der relativen Lage einer Bezugsachse eines Objektes bezüglich eines Referenz-Strahles, nach dem Stand der Technik, mit einem einzigen, jedoch doppelt wirkenden, zweidimensional auslesbaren Positions-Sensor
Fig. 3 eine erfindungsgemässe Anordnung von Sensoren zum Festellen der relativen Lage einer Bezugsachse eines Objektes bezüglich eines Referenz-Strahles, zum Beispiel zur Beurteilung der fluchtenden Lage zweier Maschinenteile, Werkzeugen, oder Werkstücke.
Fig. 4 eine weitere erfindungsgemässe Anordnung von Sensoren und einfallenden Lichtstrahl
Fig. 5 eine andere erfindungsgemässe Ausführungsform

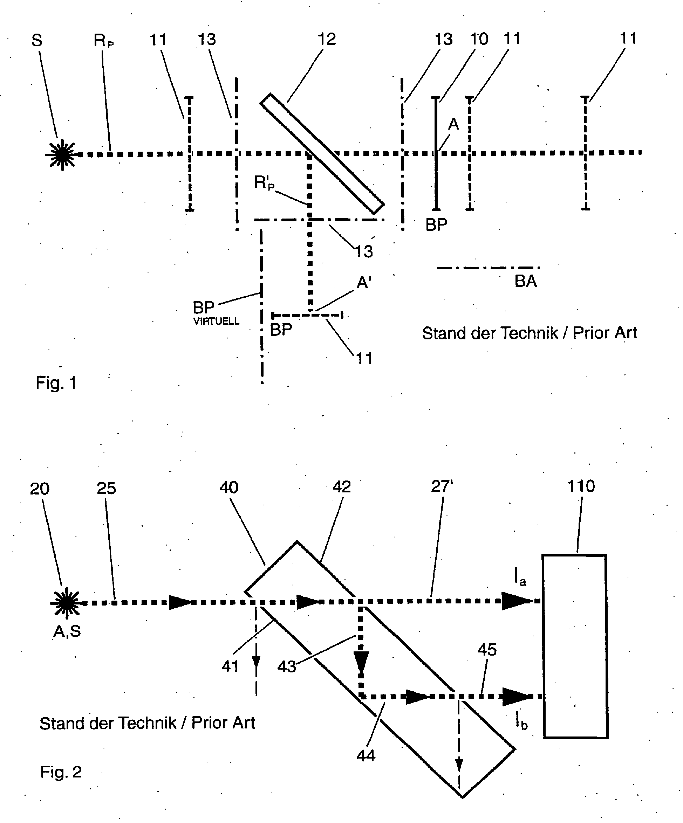

Wie in Fig. 1 gezeigt und aus der zugehörigen Patentliteratur bekannt, kann ein einziger Lichtstrahl R sowie zwei zweidimensional auslesbare optoelektronische Positions-Detektoren A und A' dazu herangezogen werden, die relative Bezugsachse eines Objektes bezüglich des Lichtstrahls R zu bestimmen. Dies kann dazu ausgenutzt werden, z.B. die Relativlage von zwei Wellenstücken, oder einer Werkzeugmaschinenspindel relativ zu einem Werkstück, sehr genau zu ermitteln. Typischerweise werden mehrere Messungen durchgeführt, um anhand eines Messdaten-Satzes genauere oder aussagekräftigere Kennwerte zu erhalten, die auch einer nachfolgenden Datenverarbeitung unterzogen werden können. Wichtig ist, dass die gezeigte Anordnung nicht nur einen Parallelversatz (nach zwei translatorischen Koordinaten) ermitteln kann, sonderen auch einen winkelmässigen Versatz der Bezugsachse, dieses nach zwei Winkelkoordinaten des Raumes.

Eine ähnlich wirkende Anordnung ist in Fig. 2 wiedergegeben, welche jedoch zwei spiegelnde oder teilspiegelnde Oberflächen vorsieht, dafür anstelle zweier separater Sensoren nunmehr einen einzigen vorsieht, der jedoch eine doppelt wirkende Funktion aufweist. Auch mit dieser Anordnung kann eine Bezugsachse relativ zu einem einfallenden Lichtstrahl nach insgesamt vier Koordinaten bestimmt werden, nämlich zwei translatorischen Koordinaten und zwei Winkelkoordinaten. Es ist nachvollziehbar, dass hohe Anforderungen an die Präzision des gezeigten Mehrfachreflektors 40 gestellt werden müssen.

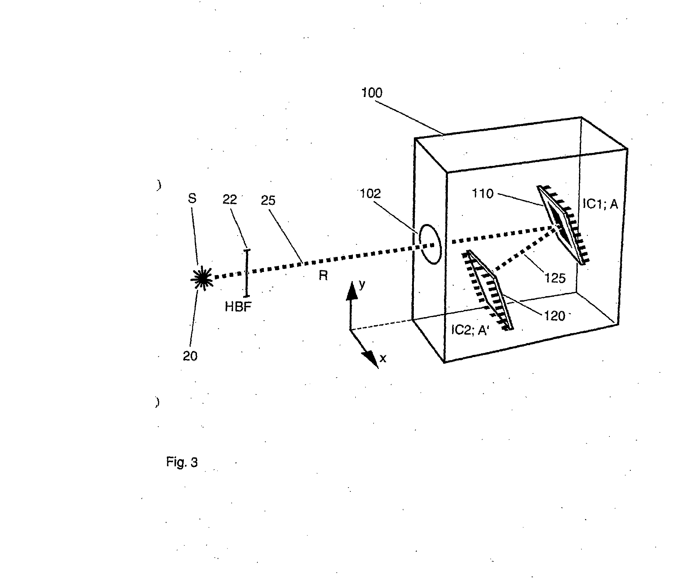

Wie in Fig. 3 gezeigt, ist es nunmehr jedoch auch möglich, auf den in Fig. 2 gezeigten Mehrfachreflektor 40, oder den in Fig. 1 gezeigten halbdurchlässigen Spiegel 12 zu verzichten. Dies geschieht dadurch, dass der zweidimensional empfindliche und auslesbare optoelektronische Sensor 110 (IC1; A) nicht nur mit seiner lichtempfindlichen Schicht in an sich bekannter Weise den Auftreffpunkt eines Lichtstrahls R, Bezugsziffer 25, zu empfangen gestattet, sondern darüberhinaus dessen sehr plane Oberfläche dazu verwendet wird, einen Anteil des auftreffenden Lichtstrahls 25 zu reflektieren. Dieser Anteil beträgt, je nach Oberflächengüte, etwa 2 bis 10 % des einfallenden Lichtes und reicht bei der heutigen Qualität der verwendeten Detektoren aus, einen zweiten optoelektronischen Sensor 120 ausreichend und wirksam zu beleuchten (IC2, A'). Dieser kann daher eine weitere Positionsbestimmung des einfallenden Lichtstrahls durchführen, wie dies in an sich bekannter Vorgehensweise erforderlich ist. Die optoelektronischen Sensoren 110, 120 werden dabei als überstrahlungsunempfindliche, zugleich hochsensitive und hochdynamische CMOS-Sensor-Schaltkreise (ICs) bereitgestellt. Ein bevorzugter IC-Baustein ist vom Typ HCDS-2000 der Firma HP/Agilent, mit einer Diagonalen der empfindlichen Fläche von ca. 8 mm. Sofern eine grösser dimensionierte Fläche der optoelektronischen Sensoren erforderlich ist, können solche ausgewählt werden, wie sie in derzeitigen sog. digitalen Kameras verwendet werden. Solche Bausteine zeichnen sich durch eine höhere relative Auflösung aus, sind aber deutlich teurer als die überraschend preiswerten Bausteine der Firma Agilent.

Wie aus Fig. 3 weiterhin hervorgeht, kann eine Laserlichtquelle S, Bezugsziffer 20, einen Laserstrahl 25 aussenden, der zur Verbesserung der Strahlqualität einen sehr preiswert erhältlichen holographischen Strahlformer (HBF) 25 passieren kann. Laserlichtquelle 20 ist dabei typischerweise in einem separaten Gehäuse angeordnet und wird bevorzugt mit einem ersten Maschinenteil verbunden. Die optischen Sensoren 110, 120 befinden sich mit Vorteil fest angeordnet in einem Gehäuse 100, welches bevorzugt mit einem zweiten Maschinenteil verbunden ist. Laserstrahl 25 tritt durch eine Apertur, z.B. ein Schutzglas oder -folie 102 in das Gehäuse 100 ein und kann direkt auf den optischen Sensor 110 einwirken.

Die von den optoelektronischen Sensoren abgegebenen Signale können in an sich bekannter Weise mittels eines geeigneten Computers und zugehöriger Software weiterverarbeitet werden, was zur Vermeidung von Längen an dieser Stelle nicht im Einzelnen erörtert werden soll. Der aus Fig. 2 bekannte Vorteil, die Lage und Intensitätsverhältnisse der auf die optoelektronischen Sensoren auftreffenden Laserstrahlen direkt über das Display eines tragbaren Computers visualisieren zu können, kann auch in der vorliegenden Erfindung wahrgenommen werden. Es versteht sich, dass im Rahmen der weiteren computermässigen Verarbeitung der von den Sensoren erfassten Signale auch Aspekte der Fernabfrage und der sogenannten "Vernetzung" behandelt und gelöst werden können.

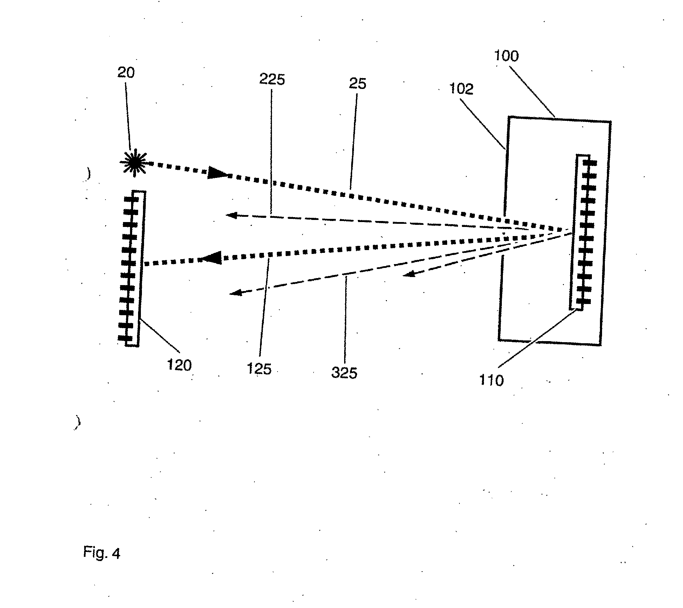

Die in Fig. 4 gezeigte weitere Ausführungsform der Erfindung vergrössert die erreichbare Winkelauflösung der Anordnung. Diese Ausführungsform wird dann bevorzugt, wenn die zu untersuchenden Winkelabweichungen im Bereich von Winkelminuten sind. Dies ist immer dann der Fall, wenn besonders hohe Anforderungen an eine Parallelität auszurichtender Maschinenteile gestellt werden. Durch die relativ weit entfernte Anordnung des optoelektronischen Sensors 120 bezüglich des Sensors 110 wird die gewünschte grössere Winkelauflösung erreicht, ohne dass die Auflösung hinsichtlich Parallelverschiebungen (Offset) reduziert wird. Die Apertur 102 kann im Falle der Ausführungsform nach Fig. 4 als teildurchlässiger Spiegel ausgeführt sein, was jedoch zusätzliche Kosten bedingt und der angestrebten preiswertesten Lösung entgegensteht. Es ergibt sich jedoch der Vorteil, dass die Intensität der empfangenen Lichtstrahlen auf beiden optoelektronischen Sensoren annähernd die gleiche ist.

Wie in Fig. 4 gezeigt, ist es auch möglich, bei Verwendung eines pixelorientierten Sensors dessen in Reflexion diffraktive Eigenschaften (Beugung am zweidimensionalen Gitter der Bildelemente) zu nutzen. Dementspechend können neben dem in sog. nullter Beugungsordung reflektierten Lichtstrahl 125 auch die gleichzeitig entstehenden Nebenstrahlen 225, 325 usw. der 1.,2.,3. usw. Beugungsordnung entweder ebenfalls auf den Sensor 120 abgebildet und ausgewertet werden, oder aber auf einen oder mehrere weitere solcher Sensoren, welche in Fig. 4 aus Gründen der Übersichtlichkeit nicht dargestellt sind. Das in Fig. 4 gezeigte Prinzip, mehrere reflektierte Strahlen (125, 225, 325) zum Vermessen der relativen Orientierung der Sensoren und damit der Einrichtung 100 relativ zu Sensor 120 heranzuziehen, kann sinngemäss in einer Anordnung gemäss Fig. 3 zur Anwendung kommen.

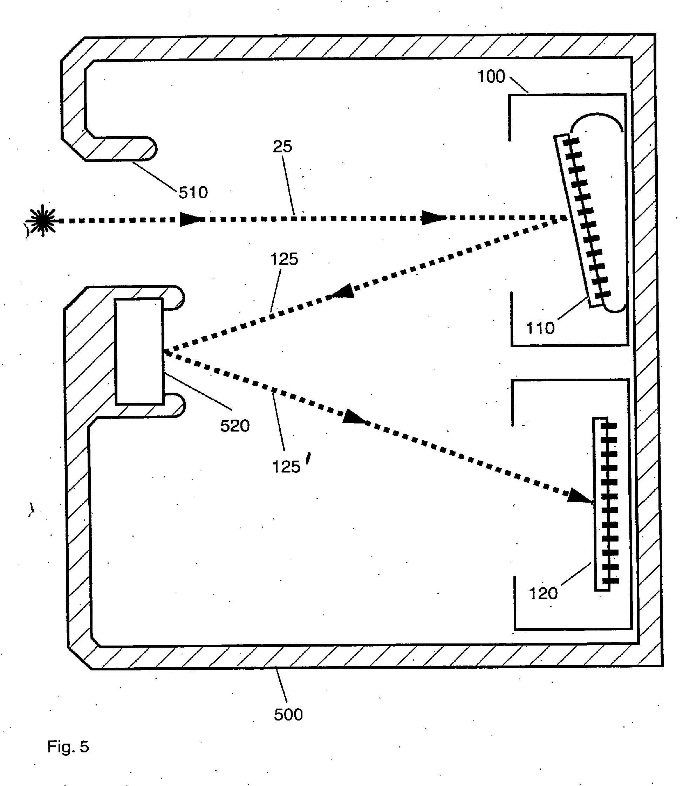

In Fig. 5 wird eine Abänderung der Konstruktion nach Fig. 4 gezeigt. Hierbei wird der Strahl 125 mittels eines Reflektors 520 gefaltet, so daß für eine angestrebte hohe Winkelauflösung eine verkürzte Bauform zur Verfügung steht. Ausserdem befinden sich die Sensoren 110, 120 in räumlicher Nähe, so daß Fragen der diesbezüglichen Verkabelung und der Signalübertragung vereinfacht werden können. Bei Bedarf können die Sensoren 110, 120 sogar monolithisch zusammengefaßt werden. Wie aus Fig. 5 hervorgeht, befinden sich innerhalb eines umschliessenden Gehäuses 500 an dessen Rückseite die Sensoren 110, 120. Sensor 110 ist etwas angewinkelt montiert. Ein Lichtstrahl 25, welcher durch die Öffnung 510 in das umschliessende Gehäuse einfällt, wird somit durch die anteilig reflektierende Oberfläche des Sensors 110 auf den Reflektor 520 gespiegelt, um von dort als Strahl 125' auf den Sensor 120 zu gelangen. Diese Sensor-Anordnung ist somit geeignet, einen einfallenden Lichtstrahl hinsichtlich dessen Relativlage in Bezug auf die Dimensionen des Gehäuses 500 zu bestimmen, und zwar nach zwei translatorischen Koordinaten. Weiterhin ist diese Sensor-Anordnung ebenfalls geeignet, die Richtung eines einfallenden Lichtstrahles nach zwei Winkelkoordinaten relativ zu den Symmetrieachsen des Gehäuses 500 zu bestimmen, wobei nur ein zusätzliches optisches Element in Form eines Reflektors erforderlich ist.

Wird darüberhinaus ein Strahl 25 von asymmetrischer Querschnittsform vorgesehen, so ist ausserdem die Drehlage ("Roll"-Koordinate) des Gehäuses 500 relativ zu einer durch den Lichtstrahl definierten Drehachse möglich.

In einer Abwandlung der Erfindung können auch optoelektronische Sensoren unterschiedlicher Technologie zum Einsatz kommen, so dass z.B. Sensor 100 pixelorientiert ist und die Sensoren zweiter Art (120) nur die Schwerpunktslage einer einfallenden Schar von Lichtstrahlen ermitteln können.

Die Erfindung in der Ausführungsform gemäß Fig. 5 ist speziell geeignet, als optische Empfangseinheit für ein Lageerkennungssystem nach DE 19733919 bzw. US 6,049,378 Verwendung zu finden.

Die gezeigte Erfindung ist so kostengünstig und benötigt so wenig elektrische Energie, dass sie gegebenenfalls auch dauerhaft an umlaufenden Wellen installiert werden kann. Zu diesem Zweck ist es von Vorteil, eine berührungslos arbeitende Energieeinspeisung und Signalauskoppelung für die verwendeten elektronischen Komponenten vorzusehen.

## Patentansprüche

1. Vorrichtung zur Vermessung oder Beurteilung der Relativlage zweier Maschinenteile, Werkzeuge, oder Werkstücke, enthaltend
- eine Einrichtung (20) zur Erzeugung eines oder mehrerer ausgeblendeter Lichtstrahlen (25),
- einen ersten (110) und einen zweiten (120) zweidimensional auslesbaren optoelektronischen Sensor,
- eine mindestens den ersten zweidimensional auslesbaren Sensor (110) enthaltende Einrichtung (100), die auch den zweiten Sensor (120) enthalten kann,
- eine Elektronik oder einen Computer, welcher eingerichtet ist, die von den optoelektronischen Sensoren abgegebenen Ausgangssignale entgegen zu nehmen, weiter zu verarbeiten und eine Relativlage der Einrichtung (100) relativ zum einfallenden ausgeblendeten Lichtstrahl (25) zu errechnen, **gekennzeichnet durch**
- eine derartige relative Ausrichtung des ersten und des zweiten zweidimensional wirkenden optoelektronischen Sensors (110, 120) zueinander, dass ein einfallender ausgeblendeter Lichtstrahl (25) von der Oberfläche der optoelektronisch wirksamen Schicht des ersten optoelektronischen Sensors (110) anteilig und im wesentlichen direkt als Lichtstrahl (125) auf den zweiten optoelektronischen Sensor (120) reflektiert wird.

2. Vorrichtung zur Vermessung oder Beurteilung der Relativlage zweier Maschinenteile, Werkzeuge, oder Werkstücke nach Anspruch 1, **gekennzeichnet durch**
- einen ersten (110) und einen oder mehrere zweite (120) zweidimensional auslesbare optoelektronische Sensoren
- eine derartige relative Ausrichtung des ersten und des bzw. der zweiten zweidimensional wirkenden optoelektronischen Sensoren (110, 120) zueinander, dass ein einfallender ausgeblendeter Lichtstrahl (25) von der Oberfläche der optoelektronisch wirksamen Schicht des ersten optoelektronischen Sensors (110) anteilig und im wesentlichen direkt in Form eines ersten (125) und gegebenenfalls weiterer Lichtstrahlen (225, 325) auf den oder die optoelektronischen Sensoren (120) reflektiert wird.

3. Vorrichtung zur Vermessung oder Beurteilung der Relativlage zweier Maschinenteile, Werkzeuge, oder Werkstücke, enthaltend
- eine Einrichtung (20) zur Erzeugung eines oder mehrerer ausgeblendeter Lichtstrahlen (25),
- einen ersten (110) und einen zweiten (120) zweidimensional auslesbaren optoelektronischen Sensor,
- ein mindestens den ersten zweidimensional auslesbaren Sensor (110) enthaltendes Gehäuse (500), das auch den zweiten Sensor (120) enthalten kann,
- eine Elektronik oder einen Computer, welcher eingerichtet ist, die von den optoelektronischen Sensoren abgegebenen Ausgangssignale entgegen zu nehmen, weiter zu verarbeiten und eine Relativlage eines Gehäuses (500) relativ zum einfallenden ausgeblendeten Lichtstrahl (25) zu errechnen, **gekennzeichnet durch**
- eine derartige relative Ausrichtung des ersten und des zweiten zweidimensional wirkenden optoelektronischen Sensors (110, 120) zueinander, dass ein einfallender ausgeblendeter Lichtstrahl (25) von der Oberfläche der optoelektronisch wirksamen Schicht des ersten optoelektronischen Sensors (110) anteilig und in einem gefalteten Strahlengang als Lichtstrahlen (125, 125') auf den zweiten optoelektronischen Sensor (120) reflektiert wird.

## Claims

1. Apparatus for measurement or assessment of the relative position of two machine parts, tools or workpieces, containing
- a device (20) for producing one or more masked-out light beams (25),
- a first (110) and a second (120) optoelectronic sensor which can be read two-dimensionally,
- a device (100) which contains at least the first sensor (110) which can be read two-dimensionally, and which device (100) may also contain the second sensor (120),
- electronics or a computer which are or is designed to receive, and furthermore to process, the output signals emitted from the optoelectronic sensors, and to calculate a relative position of the device (100) relative to the incident masked-out light beam (25),
**characterized by**
- a relative alignment of the first and of the second optoelectronic sensor (110, 120) which act two-dimensionally with respect to one another such that a component of the incident masked-out light beam (25) is reflected from the surface of the optoelectronically acting layer of the first optoelectronic sensor (110) and is reflected essentially directly as a light beam (125) onto the second optoelectronic sensor (120).

2. Apparatus for measurement or assessment of the relative position of two machine parts, tools or workpieces according to Claim 1, **characterized by**
- a first (110) and one or more second (120) optoelectronic sensors which can be read two-dimensionally,
- a relative alignment of the first and of the second optoelectronic sensor or sensors (110, 120) which act two-dimensionally with respect to one another such that a component of an incident masked-out light beam (25) is reflected from the surface of the optoelectronically acting layer of the first optoelectronic sensor (110) and is reflected essentially directly in the form of a first (125) and possibly further light beams (225, 325) onto the optoelectronic sensor or sensors (120).

3. Apparatus for measurement or assessment of the relative position of two machine parts, tools or workpieces, containing
- a device (20) for producing one or more masked-out light beams (25),
- a first (110) and a second (120) optoelectronic sensor which can be read two-dimensionally,
- a housing (500) which contains at least the first sensor (110) which can be read two-dimensionally, and which housing (500) can also contain the second sensor (120),
- electronics or a computer which are or is designed to receive, and furthermore to process, the output signals emitted from the optoelectronic sensors, and to calculate a relative position of a housing (500) relative to the incident masked-out light beam (25),
**characterized by**
- a relative alignment of the first and of the second optoelectronic sensor (110, 120) which act two-dimensionally with respect to one another such that a component of the incident masked-out light beam (25) is reflected from the surface of the optoelectronically acting layer of the first optoelectronic sensor (110) and is reflected in a folded beam path as light beams (125, 125') onto the second optoelectronic sensor (120).

## Revendications

1. Dispositif pour mesurer ou évaluer la position relative de deux parties de machine, outils ou pièces, comprenant
- un dispositif (20) pour générer un ou plusieurs rayons de lumière (25) diaphragmés,
- un premier (110) et un deuxième (120) capteur optoélectronique lisible en deux dimensions,
- un dispositif (100) qui contient au moins le premier capteur optoélectronique lisible en deux dimensions (110), lequel peut également contenir le deuxième capteur (120),
- un circuit électronique ou un ordinateur qui est conçu pour accepter les signaux de sortie délivrés par les capteurs optoélectroniques, les traiter et calculer une position relative du dispositif (100) par rapport au rayon de lumière (25) diaphragmé incident,
**caractérisé par**
- une orientation relative du premier capteur optoélectronique à effet bidimensionnel (110) par rapport au deuxième capteur optoélectronique à effet bidimensionnel (120) telle qu'un rayon de lumière (25) diaphragmé incident est réfléchi proportionnellement par la surface de la couche optoélectroniquement active du premier capteur optoélectronique (110) et pour l'essentiel directement en tant que rayon de lumière (125) sur le deuxième capteur optoélectronique (120).

2. Dispositif pour mesurer ou évaluer la position relative de deux parties de machine, outils ou pièces selon la revendication 1, **caractérisé par**
- un premier (110) et un ou plusieurs deuxièmes (120) capteurs optoélectroniques lisibles en deux dimensions,
- une orientation relative du premier capteur optoélectronique à effet bidimensionnel (110) par rapport au deuxième(s) capteur(s) optoélectronique(s) à effet bidimensionnel (120) telle qu'un rayon de lumière (25) diaphragmé incident est réfléchi proportionnellement par la surface de la couche optoélectroniquement active du premier capteur optoélectronique (110) et pour l'essentiel directement sous la forme d'un premier (125) et éventuellement de rayons de lumière supplémentaires (225, 325) sur le ou les deuxièmes capteurs optoélectroniques (120).

3. Dispositif pour mesurer ou évaluer la position relative de deux parties de machine, outils ou pièces, contenant
- un dispositif (20) pour générer un ou plusieurs rayons de lumière (25) diaphragmés,
- un premier (110) et un deuxième (120) capteur optoélectronique lisible en deux dimensions,
- un boîtier (500) qui contient au moins le premier capteur optoélectronique lisible en deux dimensions (110), lequel peut également contenir le deuxième capteur (120),
- un circuit électronique ou un ordinateur qui est conçu pour accepter les signaux de sortie délivrés par les capteurs optoélectroniques, les traiter et calculer une position relative d'un boîtier (500) par rapport au rayon de lumière (25) diaphragmé incident,
**caractérisé par**
- une orientation relative du premier capteur optoélectronique à effet bidimensionnel (110) par rapport au deuxième capteur optoélectronique à effet bidimensionnel (120) telle qu'un rayon de lumière (25) diaphragmé incident est réfléchi proportionnellement par la surface de la couche optoélectroniquement active du premier capteur optoélectronique (110) et dans un trajet de rayon plié en tant que rayons de lumière (125, 125') sur le deuxième capteur optoélectronique (120).
